# EUROPÄISCHE PATENTSCHRIFT

(11) **EP 1 263 063 B1**
(45) Veröffentlichungstag und Bekanntmachung des Hinweises auf die Patenterteilung: **06.10.2004**
(21) Anmeldenummer: 02008055.2
(22) Anmeldetag: 11.04.2002
(51) Int. Cl.: H01M 2/30, H01R 11/28, H01R 11/12

(54) **Elektrischer Akkumulator mit gekapseltem Endpol und integrierter Abdeckkappe**
Electrical accumulator with encapsulated terminal and integrated covering cap
Accumulateur électrique avec terminal encapsulé et couvercle intégré

(30) Priorität: 17.05.2001 DE 10124168
(43) Veröffentlichungstag der Anmeldung: 04.12.2002
(73) Patentinhaber: VB Autobatterie GmbH, 30419 Hannover (DE)
(72) Erfinder: Streuer, Peter, 30559 Hannover (DE); Schellenberg, Peter, 31515 Wunstorf (DE)
(74) Vertreter: Lins, Edgar, Dipl.-Phys. Dr.jur.

(56) Entgegenhaltungen:
- DE-A- 19 819 365
- DE-B- 1 032 349
- DE-B- 2 814 444
- JP-A- 11 086 840
- US-A- 4 693 948
- US-A- 5 346 408
- US-A- 6 025 088

## Beschreibung

Gegenstand der Erfindung ist ein elektrischer Akkumulator mit Endpol, der mit einem Außengewinde versehen ist, mit welchem ein flacher Kabelschuh eines Kabelanschlusses verbunden ist.

Endpole und Kabelanschlüsse für elektrische Akkumulatoren insbesondere für Starterbatterien sind in den verschiedensten Ausführungsformen bekannt. Beispielsweise ist dem Dokument DE 2814444 C2 ein mit einem Außengewinde versehener Endpol zu entnehmen, auf den ein flacher Kabelschuh aufgeschraubt ist und der durch eine Abdeckkappe abgedeckt ist.

Dem Dokument 3545522 C2 ist ebenfalls ein Endpol mit Außengewinde zu entnehmen, welcher mit flachen Kabelschuhen verschraubt wird, die mit Vertauschungssicherungen versehen sind.

Nachteilig ist bei diesen Anordnungen, dass sie über den Batteriedeckelumriss hinausragen und damit beim Stapeln von Batterien leicht beschädigt werden können. Darüber hinaus ist kein ausreichender Berührungsschutz vorhanden, der insbesondere bei höheren Batteriespannungen von Bedeutung ist.

In der DE 1 032 349 B ist ein elektrischer Akkumulator mit Endpolen offenbart, die für Zentrierungszwecke in der Mitte eine Auflagefläche herausragende kleine Erhöhung haben, auf die ein Kabelschuh gelegt wird. Der Kabelschuh wird mit einer in das Gehäuse eingeschraubten Abdeckkappe auf die Auflagescheibe des Endpols gepresst. Die Pressverbindung ist daher stark von der Flexibilität des Deckels abhängig.

Aufgabe der Erfindung ist es, einen Akkumulator mit einem weitestgehend gegen Berührung gesicherten Endpol und Kabelanschluss anzugeben, der leicht herstellbar und auch leicht montierbar ist.

Diese Aufgabe wird erfindungsgemäß bei einem elektrischen Akkumulator der eingangs genannten Art durch die kennzeichnenden Merkmale des Anspruchs 1 gelöst. In den Unteransprüchen sind vorteilhafte Ausgestaltungen der Erfinder angegeben. Im Folgenden ist der Gegenstand der Erfindung anhand der Figuren näher erläutert.
Figur 1 zeigt eine Stirnseite eines Akkumulatorendeckels aus Kunststoff und zugehörige Kabelanschlüsse.
Figur 2 zeigt einen Schritt durch den Endpol (Figur 2a) und die korrespondierende Abdeckkappe im Schnitt (Figur 2b) und in perspektivischer Darstellung (Figur 2c).

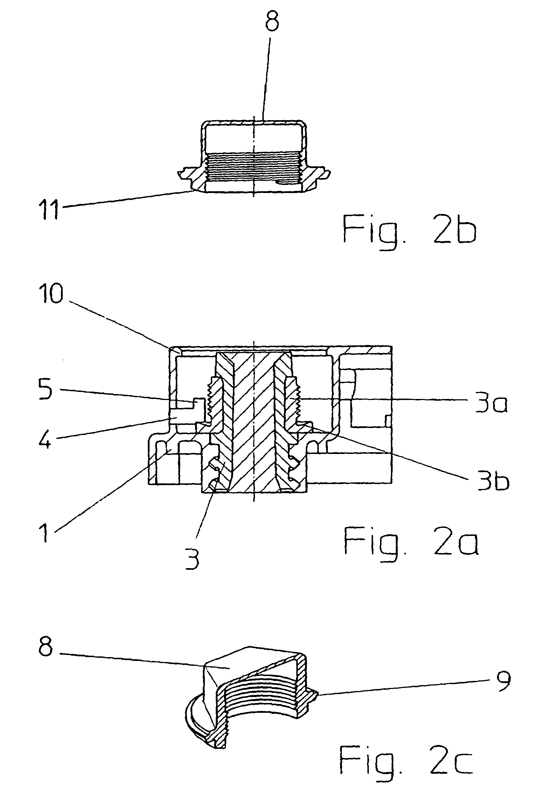

Gemäß der Erfindung ist der Endpol 3 in einer Einsenkung im Deckel 1, der auch die üblichen Einfüllöffnungen 2 enthält, angeordnet. Diese kreisförmigen Einsenkungen umgibt den Endpol 3 an allen Seiten. Der Endpol 3 ist somit nur von oben und für den Kabelanschluss zugänglich. Für den Kabelanschluss sind erfindungsgemäß flache Schlitze 4 im unteren Bereich der Deckeleinsenkung vorgesehen, sodass sie mit einer Auflagefläche 3b am Endpol 3 (Figur 2a) korrespondieren. Insbesondere sind beider üblichen Anordnung des Endpols 3 an einer Ecke des Akkumulatorengehäuses zwei derartige schmale Schlitze 4 vorhanden, die einen Zugang zum Endpol 3 ermöglichen.

Durch die schmalen Schlitze 4 sind flache Anschlusslaschen oder Kabelschuhe 6a, 7a der Anschlusskabel 6 und 7 einschiebbar, die U-förmig ausgebildet sind. Um ein Vertauschen der positiven und negativen Anschlusskabel mit dem zugehörigen Endpol zu vermeiden, sind die Anschlusslaschen 6a und 7a mit für den positiven und negativen Kabelanschluss unsymmetrisch angebrachten Nasen 6b und 7b versehen. Mit diesen Nasen 6b und 7b korrespondieren ebenfalls unsymmetrisch angebrachte Aussparungen 5 im Bereich der flachen Schlitze 4.

Der Endpol 3 besitzt in an sich bekannter Weise auf seiner Außenfläche eine Gewindehülse 3a, die beispielsweise aus verbleitem Messing besteht. Um vollkommene Berührungssicherheit zu gewährleisten, ist auf den Endpol 3 eine Abdeckkappe 8 aufgeschraubt. Diese besteht entweder vollständig aus einem harten Kunststoff, wie beispielsweise einem Duroplasten oder gefülltem Polypropylen oder ist zumindest in dem von oben zugänglichen Bereich mit einem Isoliermaterial versehen. Auch eine Abdeckkappe aus Kunststoff mit metallischem Gewindeeinsatz kann verwendet werden.

Erfindungsgemäß ist der untere Rand der Abdeckkappe 8 als vorstehender Bund 9 ausgebildet. An der Deckeleinsenkung ist eine korrespondierende, vorzugsweise umlaufende Schnappkante 10 vorgesehen, durch welche die Abdeckkappe 8 unverlierbar am Deckel befestigt ist.

Die untere Andruckfläche 11 der Abdeckkappe 8 ist abgeschrägt. Beim Aufschrauben der Abdeckkappe 8 auf das Außengewinde 3a des Endpols 3 arbeitet diese abgeschrägte Andruckfläche 11 mit der entsprechenden Abschrägung 3b an der Unterseite der Gewindehülse 3a zusammen. Ergänzend können auch die U-förmigen Schenkel der flachen Kabelanschlüsse 6a, 7a die gleiche Abschrägung aufweisen, was den elektrischen Kontakt zum Endpol wesentlich verbessert.

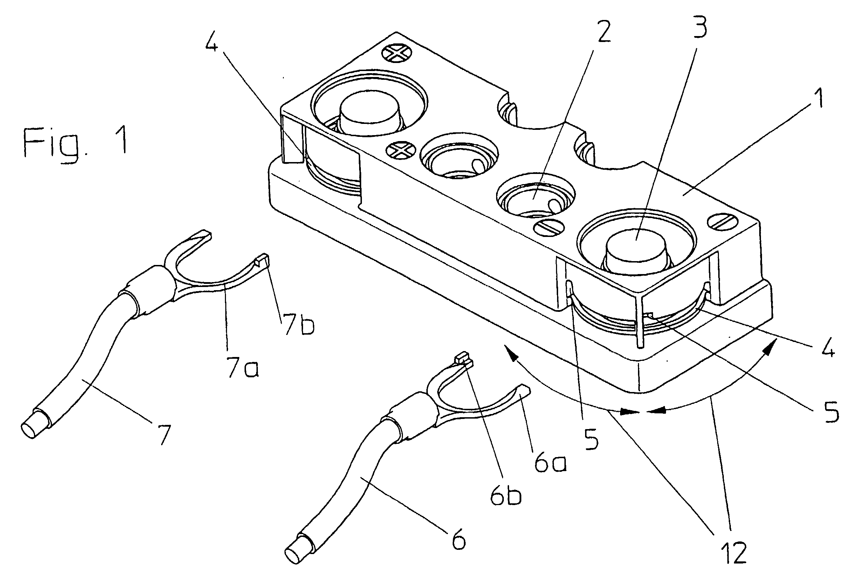

Der durch den schmalen Schlitz 4 eingeschobene Kabelanschluss ist, wie die Pfeile 12 in Figur 1 andeuten, innerhalb des durch die Schlitzbreite vorgegebenen Winkels um die Polachse drehbar.

Die Abdeckkappen 8 können mit Sicherheitshinweisen, wie beispielsweise einer Farbgebung zur Anzeige der Polarität, und/oder Aufdrucken zur Festlegung bestimmter Drehmomentgrenzen beim Befestigen versehen werden. Die erfindungsgemäße Ausgestaltung von Endpol und Deckel gewährleistet eine hohe Sicherheit gegen versehentliches Berühren des Endpols. Ein Vertauschen einer erfindungsgemäß ausgestalteten Batterie, die insbesondere eine höhere Spannung (36 Volt) als übrige Batterien aufweist, mit einer normalen Starterbatterie (12 Volt ) ist nicht möglich. Auch der Anschluss eines für 12-Volt Batterien bestimmten Starthilfekabels ist ausgeschlossen. Die spezielle Ausgestaltung der flachen Kabelanschlüsse, im Zusammenhang mit der Ausgestaltung des Einführungsschlitzes, ermöglicht es, ein Vertauschen der Polanschlüsse auszuschließen. Beim erfindungsgemäßen Deckel ist der Kabelanschluss im Fahrzeug durch einfaches Aufschrauben der im Deckel unverlierbar gehaltenen Abdeckkappe leicht montierbar.

## Patentansprüche

1. Elektrischer Akkumulator mit einem Endpol (3), wobei der Endpol (3) mit einem Außengewinde versehen ist, mit dem ein flacher Kabelschuh eines Kabelansclusses (6a, 7a) in Verbindung steht, und in einer kreisförmigen Einsenkung im Deckel (1) angeordnet ist, derart, dass der Endpol (3) an allen Seiten vom Kunststoffmaterial des Deckels umgeben ist und nur von oben und durch mindestens einen mit einer Auflagefläche (3b) am Endpol (3) korrespondierenden schmalen Schlitz (4) im unteren Bereich der Deckeleinsetzung, durch den ein flacher Kabelanschluss (6a, 7a) einschiebbar ist, **dadurch gekennzeichnet, dass** auf dem Endpol (3) eine Abdeckkappe (8) aufgeschraubt ist, die zumindest im von oben zugänglichen Bereich isolierend ausgebildet ist.

2. Elektrischer Akkumulator nach Anspruch 1, **dadurch gekennzeichnet, dass** ein vorstehender Bund (9) an der Abdeckkappe (8) hinter eine Schnappkante (10) an der Deckeleinsenkung einrastet.

3. Elektrischer Akkumulator nach einem der Ansprüche 1 und 2, **dadurch gekennzeichnet, dass** die Abdeckkappe (8) aus einem harten Kunststoffmaterial hergestellt ist.

4. Elektrischer Akkumulator nach einem der Ansprüche 1 bis 3, **dadurch gekennzeichnet, dass** der Schlitz (4) mit einer Vertauschsicherung in Form einer Aussparung (5) versehen ist, die unsymmetrisch bei positivem und negativen Anschlusspol angeordnet sind.

5. Elektrischer Akkumulator nach einem oder mehreren der Ansprüche 1 bis 4, **dadurch gekennzeichnet, dass** der durch die Schlitze (4) einschiebbare flache Kableschuh (6a, 7a) mit Nasen (6b, 7b) versehen ist, die mit den Aussparungen (5) im Bereich der flachen Schlitze (4) korrespondieren.

6. Elektrischer Akkumulator nach einem oder mehreren der Ansprüche 1 bis 5, **dadurch gekennzeichnet, dass** die Abdeckkappe (8) im Anpressbereich auf die Kabelschuhe (6a, 7a) eine Abschrägung (11) besitzt

## Claims

1. Electrical rechargeable battery having an end pole (3), which is provided with an external thread, to which a flat cable lug of a cable connection (6a,7a) is connected, and which is arranged in a circular recess in the cover (1) such that the end pole (3) is surrounded on all sides by the plastic material of the cover and is accessible only from above and through at least one narrow slot (4) in the lower region of the cover recess and which corresponds with a contract surface (3b) on the end pole (3), through which a flat cable connection (6a, 7a) can be inserted, **characterized in that** a covering cap (8), which is designed to be insulating at least in the region which is accessible from above, is screwed onto the end pole (3).

2. Electrical rechargeable battery according to Claim 1, **characterized in that** a projecting collar (9) on the covering cap (8) latches in behind a snap-action edge (10) on the cover recess.

3. Electrical rechargeable battery according to one of Claims 1 or 2, **characterized in that** the covering cap (8) is produced from a hard plastic material.

4. Electrical rechargeable battery according to one of Claims 1 to 3, **characterized in that** the slot (4) is provided with an incorrect connection protection device in the form of a cutout (5), which is arranged asymmetrically for the positive and negative connecting poles.

5. Electrical rechargeable battery according to one or more of Claims 1 to 4, **characterized in that** the flat cable lug (6a, 7a) which can be inserted through the slots (4) is provided with tabs (6b, 7b) which correspond to the cutouts (5) in the region of the flat slots (4).

6. Electrical rechargeable battery according to one or more of Claims 1 to 5, **characterized in that** the covering cap (8) has a chamfer (11) in the region where it is pressed onto the cable lugs (6a, 7a).

## Revendications

1. Accumulateur électrique avec une borne terminale (3), pourvue d'un filetage extérieur relié à une cosse de câble d'un raccord de câble (6a, 7a), et disposée dans une creusure circulaire dans le couvercle (1) de manière à ce que la borne terminale (3) soit entourée de tous les côtés par la matière plastique du couvercle et ne puisse être enfichée que par le haut et à travers au moins une fente (4) étroite correspondant à une surface portante (3b) sur la borne terminale (3) dans la zone inférieure de la pose du couvercle à travers laquelle un raccord de câble plat (6a, 7a) peut être enfiché,
**caractérisé en ce qu'**
une chape (8) est vissée sur la borne terminale (3), laquelle chape est conçue de manière isolante au moins dans la zone accessible par le haut.

2. Accumulateur électrique selon la revendication 1,
**caractérisé en ce qu'**
une collerette (9) dépassant sur la chape (8) s'encliquette derrière une arête à déclic (10) sur la creusure du couvercle.

3. Accumulateur électrique selon l'une des revendications 1 et 2,
**caractérisé en ce que**
la chape (8) est fabriquée à partir d'une matière dure en plastique.

4. Accumulateur électrique selon l'une des revendications 1 à 3,
**caractérisé en ce que**
la fente(4) est dotée d'une sécurité anti-permutation sous la forme d'un évidement (5) disposé de manière asymétrique pour la borne positive ou négative du réseau.

5. Accumulateur électrique selon une ou plus des revendications 1 à 4,
**caractérisé en ce que**
la cosse de câble (6a, 7a) plate enfichable par la fente (4) est dotée de becs (6b, 7b) qui correspondent aux évidements (5) dans la zone de la fente plate (4).

6. Accumulateur électrique selon une ou plus des revendications 1 à 5,
**caractérisé en ce que**
la chape (8) dans la zone de pression comporte un chanfrein (11) sur la cosse de câble (6a, 7a).
